# EUROPÄISCHE PATENTSCHRIFT

(11) **EP 3 755 503 B1**
(45) Veröffentlichungstag und Bekanntmachung des Hinweises auf die Patenterteilung: **03.08.2022**
(21) Anmeldenummer: 19702609.9
(22) Anmeldetag: 01.02.2019
(51) Int. Cl.: B25B 31/00, F16B 13/06

(54) **SETZWERKZEUG UND SETZVERFAHREN FÜR BOLZENANKER**
SETTING TOOL AND SETTING METHOD FOR BOLT ANCHORS
OUTIL DE POSE ET PROCÉDÉ DE POSE POUR DES GOUJONS D'ANCRAGE

(30) Priorität: 21.02.2018 DE 102018103858
(43) Veröffentlichungstag der Anmeldung: 30.12.2020
(73) Patentinhaber: fischerwerke GmbH & Co. KG, 72178 Waldachtal (DE)
(72) Erfinder: TREBER, Dominik, 70178 Suttgart (DE)
(86) Internationale Anmeldenummer: PCT/EP2019/052455
(87) Internationale Veröffentlichungsnummer: WO 2019/162058

(56) Entgegenhaltungen:
- EP-A2- 0 432 397
- WO-A1-2009/115268

## Beschreibung

Die Erfindung betrifft ein Setzwerkzeug für Bolzenanker mit den Merkmalen des Oberbegriffs des Anspruchs 1, sowie ein Verfahren zum Setzen eines Bolzenankers mit einem solchen Setzwerkzeug mit den Merkmalen des Oberbegriffs des Anspruchs 9.

Ein Werkzeug zum Einbringen und Verspannen eines Bolzenankers in einen festen Untergrund ist in der Patentschrift EP 2 265 413 B1 offenbart, in der der Oberbegriff der Ansprüche 1 und 9 gezeigt wird. Das dort beschriebene Werkzeug, welches auch als "Blitzhammer" bekannt ist, besteht im Wesentlichen aus einer Hülse, in welcher ein Befestigungselement zur Aufnahme beispielsweise eines Bolzenankers angeordnet ist. Weiter ist in der Hülse ein verschieblich gelagerter und federbeaufschlagter Stößel angeordnet. Der Stößel umfasst ein "Special Direct System", welches im Allgemeinen als "SDS-Adapter" bekannt ist, zur Aufnahme durch einen Bohrhammer. Um einen Bolzenanker mit diesem Werkzeug setzen zu können, muss eine Bohrung in einem Untergrund vorgefertigt werden. Der zu setzende Bolzenanker ist über eine Mutter in der Aufnahme der Hülse durch Federspannung gehalten. Um den Bolzenanker zu setzen, wird dieser an die vorgefertigte Bohrung angesetzt. Der Bohrhammer überträgt eine Schlagenergie auf den Stößel, der den Bolzenanker in den Untergrund eintreibt. Durch die Federbeaufschlagung des Stößels wird dieser nach dem Setzvorgang wieder in seine Ausgangsposition zurückgedrückt. Um den Bolzenanker abschließend im Untergrund zu verspreizen, muss der Bohrhammer von der schlagenden Bewegung auf eine drehende Bewegung umgestellt werden. Der Bohrhammer überträgt eine Drehbewegung auf den Stößel des Werkzeugs, wodurch die Drehbewegung auf die Mutter des Bolzenankers übertragen wird. Dies führt dazu, dass ein Spreizclip des Bolzenankers auf einen Konus gezogen wird, wodurch der Bolzenanker im Untergrund vorverspreizt. Abschließend muss mit einem ein Drehmoment anzeigendes Werkzeug, ein vom Bolzenanker abhängiges Drehmoment aufgewendet werden, um den Bolzenanker im Untergrund endfest zu verspreizen.

Nachteilig an dem in der Patentschrift EP 2 265 413 B1 aufgeführten Werkzeug ist, dass bei unterschiedlichen Bolzendurchmessern immer das komplette Werkzeug getauscht werden muss. Anders ausgedrückt muss für jede Bolzengröße, genauer gesagt für jeden Bolzendurchmesser, ein anderer, für die jeweilige Größe konzipiertes Werkzeug verwendet werden.

Aufgabe der vorliegenden Erfindung ist es daher, ein Setzwerkzeug zu schaffen, welches gegenüber dem bekannten Stand der Technik den Vorteil hat, dass mehrere Bolzenankergrößen mit nur geringem Mehr- bzw. Materialaufwand gesetzt werden können.

Diese Aufgabe wird erfindungsgemäß durch das Setzgerät mit den Merkmalen des Anspruchs 1 sowie durch das Verfahren mit den Merkmalen des Anspruchs 9 gelöst. Die Erfindung schlägt ein Setzwerkzeug insbesondere für Bolzenanker vor. Unter einem Bolzenanker soll im Folgenden insbesondere ein Befestigungsmittel verstanden werden, welches einen zylindrischen Metallbolzen mit einem Gewindeabschnitt, einer auf dem Gewindeabschnitt angeordneten Mutter, sowie einen Konus mit einem am Konus angeordneten Spreizelement, insbesondere einem metallblechartigen Spreizclip umfasst. Zwischen dem Spreizclip und der Mutter kann zusätzlich, aber nicht zwingend, eine Unterlegscheibe auf dem Metallbolzen angeordnet sein. Das Setzwerkzeug umfasst einen, insbesondere hohlzylinderartigen, ersten Grundkörper, welcher eine Haltevorrichtung für einen Bolzenanker an einem offenen ersten Ende umfasst. Die Haltevorrichtung erstreckt sich in einem Innenraum des ersten Grundkörpers, beginnend vom ersten Ende in Richtung eines zweiten Endes. Hierbei erstreckt sich die Haltevorrichtung vorteilhafterweise in einem Bereich zwischen 5% bis 75% der von dem ersten und dem zweiten Ende des ersten Grundkörpers begrenzen Länge. Die Haltevorrichtung ist vorzugsweise als Sechskant ausgestaltet, der sechszählig drehsymmetrisch bezüglich einer ersten Zylinderachse im ersten Grundkörper orientiert ist. Die Haltevorrichtung kann allerdings beispielsweise auch aus zwei parallel zueinander und zweizählig drehsymmetrisch bezüglich der ersten Zylinderachse orientierten Flächen realisiert sein.

In der Haltevorrichtung des ersten Grundkörpers kann eine Klemmvorrichtung angeordnet sein, die sich in Richtung der ersten Zylinderachse erstreckt. Vorteilhafterweise ist eine derartige Klemmvorrichtung als eine oder mehrere Spannfedern, Blattfedern, Kugelfedern oder dergleichen ausgestaltet und erstreckt sich, beginnend von einer Fläche der Haltevorrichtung, in Richtung der ersten Zylinderachse. Eine derartige Klemmvorrichtung kann auch an einem Außenumfang des ersten Grundkörpers angeordnet sein, die das erste Ende des ersten Grundkörpers übergreift und sich in Richtung der ersten Zylinderachse erstreckt. Die Haltevorrichtung dient zur Aufnahme eines Bolzenankers, insbesondere zur formschlüssigen Aufnahme einer Mutter eines Bolzenankers, worüber dann der Bolzenanker selbst in der Haltevorrichtung gehalten ist. Die Klemmvorrichtung, die entweder auf die Mutter oder einen zylindrischen Metallbolzen des Bolzenankers wirkt, hält den Bolzenanker leicht reibschlüssig in der Aufnahmevorrichtung und sorgt dafür, dass dieser nicht ohne Weiteres aus der Haltevorrichtung herausfallen kann.

Weiter ist am zweiten Ende des ersten Grundkörpers eine erste, insbesondere als Mehrkant ausgestaltete Aufnahmevorrichtung angeordnet, die sich im Innenraum des ersten Grundkörpers in Richtung des ersten Endes erstreckt. Vorzugsweise erstreckt sich die Aufnahmevorrichtung derart weit in den ersten Grundkörper, dass die Aufnahmevorrichtung an die Haltevorrichtung angrenzt. Die Aufnahmevorrichtung ist drehsymmetrisch bezüglich der ersten Zylinderachse orientiert und vorzugsweise als Vierkant ausgestaltet. Auch eine Ausgestaltung als Drei- oder Mehrkant ist möglich.

Zur Verbindung mit dem ersten Grundkörper weist das Setzwerkzeug einen zweiten, insbesondere vollzylinderartigen Grundkörper auf. Der zweite Grundkörper weist an einem ersten Ende eine Werkzeugvorrichtung mit einer stirnseitigen Werkzeugschlagfläche auf. Die Werkzeugvorrichtung ist insbesondere als SDS-Adapter ausgestaltet und dient zur Aufnahme in beispielsweise einem Bohrhammer oder einem ähnlichen Werkzeug. Über die stirnseitige Werkzeugschlagfläche kann Schlagenergie von dem Bohrhammer auf den zweiten Grundkörper übertragen werden, und durch den SDS-Adapter ist der zweite Grundkörper bezüglich dem Bohrhammer drehfest gehalten, wodurch eine von dem Bohrhammer erzeugte Drehenergie auf den zweiten Grundkörper übertragen werden kann. An einem zweiten Ende des zweiten Grundkörpers, welches dem ersten Ende abgewandt ist, ist eine zweite Aufnahmevorrichtung sowie eine stirnseitige Bolzenschlagfläche angeordnet. Die zweite Aufnahmevorrichtung ist drehsymmetrisch bezüglich einer zweiten Zylinderachse des zweiten Grundkörpers orientiert und korrespondiert mit der ersten Aufnahmevorrichtung des ersten Grundkörpers. Der zweite Grundkörper ist über die zweite Aufnahmevorrichtung in der ersten Aufnahmevorrichtung des ersten Grundkörpers geführt, sodass die erste Zylinderachse des ersten Grundkörpers und die zweite Zylinderachse des zweiten Grundkörpers koaxial orientiert und der erste Grundkörper und der zweite Grundkörper relativ zueinander axial verschieblich und durch die erste und die zweite Aufnahmevorrichtung drehfest zueinander gehalten sind. Insbesondere sind die erste Aufnahmevorrichtung und die zweite Aufnahmevorrichtung als Vierkant ausgestaltet, derart, dass die zweite Aufnahmevorrichtung in der ersten Aufnahmevorrichtung und somit der erste Grundkörper und der zweite Grundkörper relativ zueinander widerstandsfrei oder allenfalls höchstens leicht klemmend zueinander axial verschieblich sind.

Kennzeichnend für die Erfindung ist, dass der erste Grundkörper eine Ausnehmung als ein, insbesondere parallel zur ersten Zylinderachse orientiertes, erstes, insbesondere langlochartiges Anschlagelement aufweist, das mit einem zweiten, insbesondere zapfenartigen, in radialer Richtung federbeaufschlagten Anschlagelement am zweiten Grundkörper korrespondiert und eine Bewegung des ersten und des zweiten Grundkörpers relativ zueinander in axialer Richtung begrenzt. Das zweite in radialer Richtung federbeaufschlagte Anschlagelement wird im Folgenden "zweites Anschlagelement" genannt. Unter "Ausnehmung" ist vorzugsweise ein Durchbruch im ersten Grundkörper zu verstehen, der von einer Außenseite des ersten Grundkörpers vorzugsweise bis in die erste Aufnahmevorrichtung ragt. Erfindungsgemäß erstreckt sich die Ausnehmung in eine Richtung entlang der ersten Zylinderachse nicht gänzlich bis zum zweiten Ende des ersten Grundkörpers. Damit verhindert das zweite Anschlagelement eine ungewollte Trennung des zweiten Grundkörpers vom ersten Grundkörper. Eine Bewegung des zweiten Grundköpers in Richtung des zweiten Endes des ersten Grundkörpers ist dann beendet, wenn das zweite Anschlagelement in Anlage mit einem hinteren Ende des ersten Anschlagelements gelangt, welches in Richtung des zweiten Endes des ersten Grundkörpers orientiert ist. In Richtung des ersten Endes des ersten Grundkörpers kann das erste Anschlagelement bis gänzlich zum ersten Ende des ersten Grundkörpers ragen. Vorzugsweise erstreckt sich die Ausnehmung jedoch nur bis zu einem vorderen Ende des ersten Anschlagelements, an welchem die erste Aufnahmevorrichtung und die Haltevorrichtung im ersten Grundkörper aneinander angrenzen. Eine maximale Verschieblichkeit des zweiten Grundkörpers im ersten Grundkörper ist somit vorzugsweise durch die Längsausdehnung des ersten Anschlagelements in Richtung der ersten Zylinderachse beschränkt. Durch das vordere Ende und das hintere Ende des ersten Anschlagelements ist der zweite Grundkörper stets durch das zweite Anschlagelement im ersten Grundkörper gehalten und kann nicht unbeabsichtigt aus diesem herausfallen. Das erste Anschlagelement muss nicht zwangsläufig als Langloch im ersten Grundkörper ausgestaltet sein. Dadurch, dass eine Drehsicherung und eine Führung des zweiten Grundkörpers im ersten Grundkörper durch die erste und die zweite Aufnahmevorrichtung gegeben ist, kann die Ausgestaltung des ersten Anschlagelements mannigfaltig sein, solange gewährleistet ist, dass das hintere Ende des ersten Anschlagelements als Anschlag für das zweite Anschlagelement dient. So kann sich, anstatt einer langlochartigen Ausgestaltung, das erste Anschlagelement als eine Ausnehmung über einen Großteil einer Umfangsrichtung des insbesondere hohlzylinderartigen ersten Grundkörpers erstrecken. Das erste Anschlagelement muss nicht zwangsläufig als Durchbruch ausgestaltet sein. Auch ist es möglich, dass das erste Anschlagelement als eine Vertiefung im ersten Grundkörper ausgestaltet ist, die sich von einer Innenseite des ersten Grundkörpers in Richtung der Außenseite des ersten Grundkörpers erstreckt. Aus Gründen der Visualisierung ist jedoch ein Durchbruch zu bevorzugen, da hier einfach ersichtlich ist, an welcher Stelle im ersten Anschlagelement sich das zweite Anschlagelement befindet.

Das zweite Anschlagelement ist vorzugsweise am zweiten Ende des zweiten Grundkörpers angeordnet und ragt in radialer Richtung vom zweiten Grundkörper ab. Das zweite Anschlagelement muss zumindest teilweise in das erste Anschlagelement hineinragen, damit der erste und der zweite Grundkörper miteinander verbunden bleiben. Das zweite Anschlagelement kann auch derart weit in das erste Anschlagelement hineinragen, dass das zweite Anschlagelement über den zweiten Grundkörper hinausragt. Das zweite Anschlagelement muss nicht zwangsläufig am zweiten Ende des zweiten Grundkörpers angeordnet sein. Auch ist eine Anordnung weiter in Richtung des ersten Endes des zweiten Grundkörpers denkbar, was die Funktionalität des Setzwerkzeugs nicht gefährdet. Ebenfalls ist eine bevorzugte zapfenartige Ausgestaltung nicht zwingend notwendig. So ist auch eine dornartige, kugelartige oder blattartige Ausgestaltung des zweiten Anschlagelements vorstellbar, solange eine Federbeaufschlagung gegeben ist. Durch die Federbeaufschlagung des zweiten Anschlagelements ist es möglich, das zweite Anschlagelement relativ einfach außer Eingriff zum ersten Anschlagelement zu bewegen. Dadurch ist es einem Benutzer des Setzwerkzeuges möglich, den ersten Grundkörper, der für die Montage einer gewissen Bolzenankergröße vorgesehen ist, schnell und einfach gegen einen anderen Grundkörper auszutauschen, der für die Montage einer anderen Bolzengröße geeignet ist. Somit muss ein Benutzer stets nur den ersten Grundkörper an die zu montierende Bolzenankergröße anpassen, wobei der zweite Grundkörper stets beibehalten werden kann.

In einer weiteren vorteilhaften Ausgestaltung der Erfindung ist das zweite Anschlagelement als Drucktaster ausgestaltet. Dadurch ist es möglich, durch eine Krafteinwirkung auf den Drucktaster, diesen in eine Richtung insbesondere senkrecht zu der zweiten Zylinderachse des zweiten Grundkörpers zu bewegen, wodurch dieser näherungsweise bündig mit der zweiten Aufnahmevorrichtung abschließen kann. Anders ausgedrückt, kann der Drucktaster ausreichend weit in die zweite Aufnahmevorrichtung eingedrückt werden, so dass das zweite Anschlagelement nicht mehr über die zweite Aufnahmevorrichtung übersteht. Dadurch ist das zweite Anschlagelement außer Eingriff zum ersten Anschlagelement bringbar. In einem solchen Zustand kann der zweite Grundkörper bevorzugt in Richtung des zweiten Endes des ersten Grundkörpers aus der ersten Aufnahmevorrichtung und somit aus dem ersten Grundkörper entfernt werden. Möglich wäre auch ein Entfernen des zweiten Grundkörpers aus dem ersten Grundkörper, indem der zweite Grundkörper in Richtung des ersten Endes des ersten Grundkörpers geschoben wird. Jedoch ist die zuvor beschriebene Montagerichtung aus Sicht der Benutzerfreundlichkeit zu bevorzugen.

Da das erste Anschlagelement insbesondere als Langloch ausgestaltet ist, korrespondiert in einer weiteren vorteilhaften Ausgestaltung der Erfindung ein Durchmesser des zweiten Anschlagelements mit einer Breite des ersten Anschlagelements. Das erste Anschlagelement und das zweite Anschlagelement korrespondieren insbesondere spielpassungsartig miteinander. Anders ausgedrückt, ist das insbesondere zapfenartig ausgestaltete, zweite Anschlagelement in dem Langloch derart geführt, dass der erste Grundkörper und der zweite Grundkörper klemmfrei relativ zueinander axial verschieblich sind. Dadurch, dass das erste Anschlagelement und das zweite Anschlagelement insbesondere spielpassungsartig miteinander korrespondieren, ist für einen Benutzer des Setzwerkzeugs eine angenehme Handhabung des Setzwerkzeugs während der Benutzung gewährleistet.

Damit gewährleistet ist, dass ein Bolzenanker, der mit dem Setzwerkzeug in einem festen Untergrund montiert wird, ausreichend im festen Untergrund verspreizen kann, korrespondiert in einer weiteren erfindungsgemäßen Ausgestaltung der Erfindung eine Länge des ersten Anschlagelements mit einem Verspreizweg eines Spreizelements des Bolzenankers, insbesondere einem Spreizclip. Ist der Bolzenanker in den Untergrund eingebracht, verbleibt das Spreizelement im Wesentlichen ortsfest bezüglich des Untergrunds. Ein Metallbolzen des Bolzenankers, an dessen dem Untergrund zugewandten Ende ein Konus angeordnet ist, wird entgegen der Einbringrichtung des Bolzenankers in den Untergrund mit einer Kraft beaufschlagt, wodurch sich der Konus in das Spreizelement schiebt und sich der Metallbolzen um einen gewissen, vom Bolzenanker und von der Beschaffenheit des Untergrunds abhängigen, Verspreizweg entgegen der Einbringrichtung des Bolzenankers bewegt, wodurch das Spreizelement im Untergrund verspreizt. Die Länge des ersten Anschlagelements korrespondiert insbesondere mit dem Verspreizweg derart, dass bei bestimmungsgemäßer Benutzung des Setzwerkzeugs, das bestimmungsgemäße Verspreizen des Bolzenankers beendet ist, bevor das zweite Anschlagelement mit dem hinteren Ende des ersten Anschlagelements in Anlage tritt. Ist das zweite Anschlagelement in Anlage mit dem hinteren Ende des ersten Anschlagelements, bevor der Bolzenanker bestimmungsgemäß und ausreichend verspreizt ist, kann der Verspreizvorgang zwar mit dem Setzwerkzeug weitergeführt werden, jedoch schiebt dann, bei weiterem Verspreizen, sprich bei weiterer Beaufschlagung des zweiten Grundkörpers mit Drehenergie, der zweite Grundkörper den Bolzenanker aus der Haltevorrichtung, wodurch die Mutter außer Eingriff zur Haltevorrichtung tritt. Spätestens dann ist kein weiteres Verspreizen mehr möglich. Zudem besteht die Gefahr, dass durch das Herausdrücken der Mutter aus der Haltevorrichtung bei gleichzeitiger Aufnahme von Drehenergie die Mutter und/oder der zweite Grundkörper beschädigt werden können. Die Länge des ersten Anschlagelements kann deutlich länger als der Verspreizweg des Bolzenankers ausgestaltet sein, jedoch nicht kürzer, was unweigerlich zu einem unzureichenden Verspreizen des Bolzenankers im Untergrund führen würde.

In einer weiteren vorteilhaften Ausgestaltung der Erfindung ist am zweiten Ende des ersten Grundkörpers eine Einführeinrichtung angeordnet, durch welche das zweite Anschlagelement in Wirkverbindung mit dem ersten Anschlagelement bringbar ist. Die Einführeinrichtung ist insbesondere als eine geneigte Fläche ausgestaltet, die beginnend am zweiten Ende des ersten Grundkörpers angeordnet ist und sich vorzugsweise bündig bis zum hinteren Ende des ersten Anschlagelements erstreckt. Die Neigung der Einführeinrichtung, insbesondere der geneigten Fläche, ist, beginnend am zweiten Ende des ersten Grundkörpers, in Richtung der ersten Zylinderachse des ersten Grundkörpers, fallend orientiert. Die Einführeinrichtung und die erste Zylinderachse des ersten Grundkörpers schließen hierbei einen Winkel von mindestens 3°, bevorzugt bis zu 30° und vorzugsweise bis maximal 60° ein. Die Einführeinrichtung erleichtert das Einbringen des zweiten Anschlagelements des zweiten Grundkörpers in das erste Anschlagelement des ersten Grundkörpers und somit das Einbringen des zweiten Grundkörpers in den ersten Grundkörper signifikant. Wird das zweite Ende des zweiten Grundkörpers in das zweite Ende des ersten Grundkörpers eingebracht, wird das zweite Anschlagelement unweigerlich zumindest teilweise während der Bewegung des zweiten Grundkörpers in Richtung des ersten Endes des ersten Grundkörpers in die zweite Aufnahmevorrichtung eingedrückt. Ist der zweite Grundkörper derart weit in den ersten Grundkörper eingeschoben, dass das zweite Anschlagelement mit dem hinteren Ende des ersten Anschlagelement korrespondiert, "schnappt" das sich zumindest teilweise in der zweiten Aufnahmevorrichtung befindliche zweite Anschlagelement durch die Federbeaufschlagung in seine ursprüngliche Position zurück, wodurch das zweite Anschlagelement in das erste Anschlagelement eingreift und der zweite Grundkörper am ersten Grundkörper gesichert ist.

Um eine möglichst einfache Demontage des zweiten Grundkörpers vom ersten Grundkörper zu ermöglichen, ist in einer weiteren erfindungsgemäßen Ausgestaltung des Setzwerkzeugs am ersten Grundkörper ein Betätigungselement angeordnet, mit welchem das zweite Anschlagelement von dem ersten Anschlagelement und somit der erste Grundkörper vom zweiten Grundkörper trennbar ist. Das Betätigungselement ist insbesondere als federnder Druckknopf ausgestaltet, der zumindest teilweise in das erste Anschlagelement eindrückbar ist und vorzugweise mit der zweiten Aufnahmevorrichtung des zweiten Grundkörpers in Wirkverbindung tritt. Anders ausgedrückt, kann mit dem Betätigungselement das zweite Anschlagelement kraftbeaufschlagt und somit zumindest teilweise in die zweite Aufnahmevorrichtung gedrückt werden. In diesem Zustand ist es möglich, den zweiten Grundkörper relativ einfach vom ersten Grundkörper zu trennen, da das zweite Anschlagelement nicht in Eingriff zum ersten Anschlagelement steht. Dadurch, dass durch das Betätigungselement der zweite Grundkörper einfach vom ersten Grundkörper getrennt werden kann, ist es ohne großen Aufwand möglich, einen weiteren zweiten Grundkörper, der für eine andere Bolzengröße vorgesehen ist, am ersten Grundkörper zu befestigen. Insbesondere ermöglicht die Kombination aus dem Betätigungselement und der Einführeinrichtung eine komfortable Montage und Demontage des ersten und des zweiten Grundkörpers.

Um eine Beschädigung des zweiten federbeaufschlagen Anschlagelements, insbesondere eines im zweiten Anschlagelement verbauten Federelements, zu vermeiden, ist in einer weiteren erfindungsgemäßen Ausgestaltung des Setzwerkzeugs am zweiten Grundkörper eine Schulter angeordnet, wodurch eine maximale axiale Verschieblichkeit des zweiten Grundkörpers in Richtung des ersten Endes des ersten Grundkörpers begrenzt ist. Die Schulter ist insbesondere an einem tellerartigen Bund ausgebildet und erstreckt sich radial bezüglich der zweiten Zylinderachse über die zweite Aufnahmevorrichtung. Vorzugsweise ist die Schulter in Richtung des ersten Endes des zweiten Grundkörpers angrenzend an die zweite Aufnahmevorrichtung angeordnet, kann jedoch auch in axialer Richtung von dieser beabstandet sein. Insbesondere ist die Schulter jedoch derart weit vom zweiten Ende des zweiten Grundkörpers in Richtung des ersten Endes des zweiten Grundkörpers beabstandet, dass beim Einbringen des zweiten Endes des zweiten Grundkörpers in das zweite Ende des ersten Grundkörpers das zweite Anschlagelement in Richtung des ersten Endes des ersten Grundkörpers nicht über das vordere Ende des ersten Anschlagelements hinaus bewegt werden kann. Andernfalls würde dies zwangsläufig zu einem Verkanten des zweiten Anschlagelements oder gar zur Zerstörung des zweiten Anschlagelements, insbesondere der verwendeten Federmechanik, führen. Der maximale Weg des zweiten Grundkörpers im ersten Grundkörper ist dann erreicht, wenn die Schulter mit dem zweiten Ende des ersten Grundkörpers in Anlage tritt. Die Schulter kann als beliebiges Anschlagelement ausgestaltet sein, solange dieses, zumindest punktuell, einen größeren radialen Durchmesser bezüglich der zweiten Zylinderachse aufweist, als die erste Aufnahmevorrichtung des ersten Grundkörpers bezüglich der ersten Zylinderachse.

Um eine möglichst hohe Standzeit des Setzwerkzeuges zu gewährleisten, ist in einer weiteren erfindungsgemäßen Ausgestaltung des Setzwerkzeuges sowohl der erste Grundkörper, als auch der zweite Grundkörper aus einem, insbesondere gehärteten, Metall gefertigt. Dadurch ist außerdem gewährleistet, dass das Setzwerkzeug bei langer Lebensdauer ausreichend Schlag- und Drehenergie aufnehmen kann.

Ein erfindungsgemäßes Verfahren zur Verwendung des erfindungsgemäßen Setzwerkzeuges zum Setzen eines Bolzenankers, der einen Metallbolzen mit einer Eintreibfläche an einem ersten Ende, ein Gewinde mit Mutter, sowie einen Konus mit einem Spreizclip an einem zweiten Ende aufweist, umfasst die folgenden Vormontageschritte, wobei die Reihenfolge beispielhaft und die aufgeführten Vormontageschritte nicht abschließend sind:
Die Werkzeugvorrichtung, bei welcher es sich insbesondere um einen SDS-Adapter handelt, und die stirnseitige Werkzeugschlagfläche am ersten Ende des zweiten Grundkörpers werden mit einem Werkzeug, insbesondere einem Bohrhammer, durch Aufstecken verbunden. Hierdurch kann das Werkzeug Schlagenergie durch die stirnseitige Werkzeugschlagfläche auf den zweiten Grundkörper übertragen und diesen zudem in Rotation versetzen.

Das erste Ende des Metallbolzens, welches dem Konus abgewandt ist, wird in axialer Richtung in die Haltevorrichtung am ersten Ende des ersten Grundkörpers eingebracht und zwar derart, dass der Metallbolzen, insbesondere durch die Mutter und insbesondere klemmend durch die Klemmvorrichtung, in der Haltevorrichtung im ersten Grundkörper gehalten ist. Die Mutter ist formschlüssig in der Haltevorrichtung angeordnet. Dadurch kann die Rotationsenergie, die vom zweiten Grundkörper erzeugt und auf den ersten Grundkörper übertragen wird, auf die Mutter weitergeleitet werden. Durch die Klemmvorrichtung ist der Bolzenanker vor Herausfallen aus dem ersten Grundkörper gesichert.

Um den Bolzenanker mit dem erfindungsgemäßen Setzgerät bestimmungsgemäß setzen zu können ist sicherzustellen, dass die Bolzeneinschlagfläche am zweiten Ende des zweiten Grundkörpers unmittelbar auf die Eintreibfläche des Bolzenankers trifft. Würde die Bolzeneinschlagfläche nicht auf die Eintreibfläche, sondern direkt auf die Mutter schlagen, würde die Schlagenergie über die Mutter auf den Metallbolzen übertragen werden, was zu einer Beschädigung des Gewindes führen könnte. Folglich ist der Metallbolzen derart weit in axialer Richtung in Richtung des zweiten Endes des ersten Grundkörpers zu schrauben, dass die Bolzenschlagfläche nicht auf die Mutter treffen kann. Weiter ist darauf zu achten, dass das zweite Anschlagelement derart weit in Richtung des vorderen Endes des ersten Anschlagelements positioniert ist, dass ein ausreichender Spreizweg des Konus bezüglich des Spreizelements zur Verfügung steht. Anders gesagt, soll der im Untergrund gesetzte Anker bestimmungsgemäß ausreichend verspreizen können, bevor das zweite Anschlagelement mit dem hinteren Ende des ersten Anschlagelements in Kontakt tritt.

In einem weiteren bevorzugten Schritt des erfindungsgemäßen Verfahrens wird der vom Setzwerkzeug aufgenommene Bolzenanker durch Schlagenergie, welche durch das Werkzeug aufgewendet wird, in den zu befestigenden Untergrund bis zu einer gewünschten, von der speziellen Anwendung abhängigen Setztiefe eingetrieben. Hierbei ist eine maximale Setztiefe dann erreicht, wenn die Mutter oder das erste Ende des ersten Grundkörpers mit der Oberfläche des Untergrunds in Kontakt tritt. Der Bolzenanker muss nicht zwangsläufig derart weit in den Untergrund eingetrieben werden, dass das erste Ende des ersten Grundkörpers mit der Oberfläche in Kontakt tritt, jedoch ist darauf zu achten, dass der Metallbolzen des Bolzenankers eine ausreichende Anzahl von Gewindegängen aufweist, um einen ausreichenden Verspreizweg des Spreizelements zum Konus hin zu gewährleisten.

In einem darauffolgenden Schritt des erfindungsgemäßen Verfahrens wird mit dem schlagenden und drehenden Werkzeug Drehenergie auf den zweiten Grundkörper übertragen, der die aufgewendete Drehenergie auf den ersten Grundkörper überträgt, wodurch sich die Mutter entlang des Bolzens in Richtung des Konus schraubt und sich das erste Ende des Metallbolzens in Richtung des zweiten Endes des ersten Grundkörpers bewegt. Ist der Bolzenanker im zu befestigenden Untergrund ausreichend verspreizt, kann das Setzwerkzeug von der Mutter abgezogen und somit das Setzwerkzeug von dem Bolzenanker getrennt werden. Um sicherzustellen, dass der Bolzenanker mit einem ausreichenden Drehmoment im Untergrund verspreizt ist, kann mit einem ein Drehmoment anzeigenden Werkzeug, insbesondere einem Drehmomentschlüssel, die Verspreizung kontrolliert und gegebenenfalls nachverspreizt werden.

Die Erfindung wird nachfolgend anhand eines in der Zeichnung dargestellten Ausführungsbeispiels erklärt.

Es zeigen:
- Figur 1: eine Schnittdarstellung eines erfindungsgemäßen Setzwerkzeugs in einem demontierten Zustand mit einem Bolzenanker;
- Figur 1b: eine Schnittdarstellung eines ersten Grundkörpers des erfindungsgemäßen Setzwerkzeugs;
- Figur 2: eine Schnittdarstellung des erfindungsgemäßen Setzwerkzeugs aus Figur 1 in einem Vormontagezustand mit dem in einen Untergrund eingetriebenen Bolzenanker; und
- Figur 3: eine Schnittdarstellung des erfindungsgemäßen Setzwerkzeugs aus den Figuren 1 und 2 in einem Endmontagezustand mit dem im Untergrund verspreizten Bolzenanker.

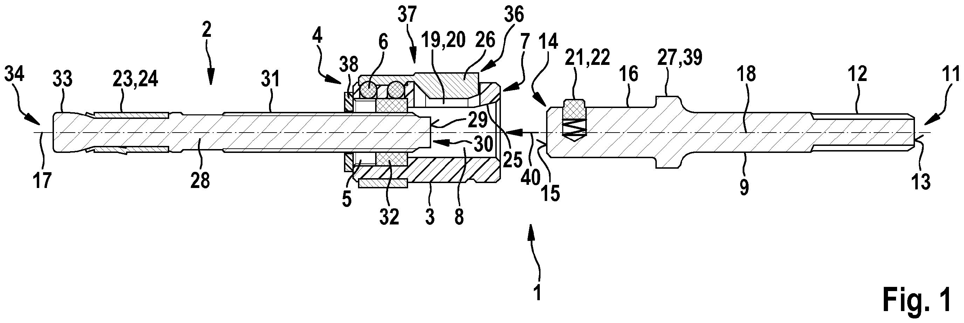

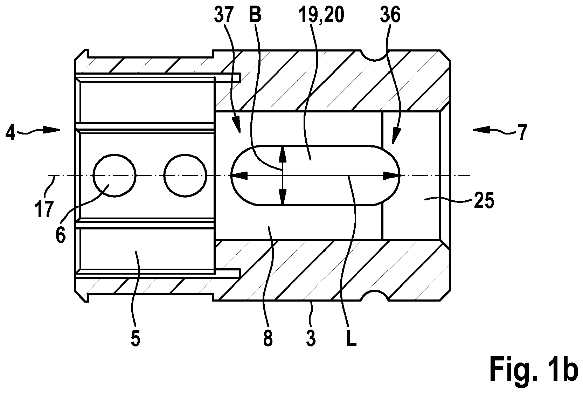

In Figur 1 ist ein erfindungsgemäßes Setzwerkzeug 1 in einem demontierten Zustand dargestellt. Das Setzwerkzeug 1 umfasst einen ersten hohlzylinderartigen Grundkörper 3 mit einem ersten offenen Ende 4 und einem zweiten offenen Ende 7. Am ersten offenen Ende 4 des ersten Grundkörpers 3 ist im Inneren des ersten Grundkörpers 3 eine bezüglich einer ersten Zylinderachse 17 des ersten Grundkörpers 3 sechszählig drehsymmetrische und somit als Innensechskant ausgestaltete Haltevorrichtung 5 angeordnet. An die Haltevorrichtung 5 angrenzend umfasst der erste Grundkörper 3 eine erste Aufnahmevorrichtung 8, die sich im Inneren des ersten Grundkörpers 3 bis zum zweiten offenen Ende 7 des ersten Grundkörpers 3 erstreckt. Die erste Aufnahmevorrichtung 8 ist bezüglich der ersten Zylinderachse 17 als vierzählig drehsymmetrischer Innenvierkant ausgestaltet. Die erste Aufnahmevorrichtung 8 ist bezüglich der Haltevorrichtung 5 derart dimensioniert und im ersten Grundkörper 3 angeordnet, dass zwei Seiten der ersten Aufnahmevorrichtung 8 zu zwei Seiten der Haltevorrichtung 5 parallel orientiert sind. Zudem schließen Ecken des Vierkants mit Seitenflächen des Sechskants bündig ab, wodurch sich die erste Aufnahmevorrichtung 8 radial bezüglich der ersten Zylinderachse 17 an keinem Punkt im Inneren des ersten Grundkörpers 3 über die Haltevorrichtung 5 hinaus erstreckt.

In der Haltevorrichtung 5 sind an einer Seite des Innensechskants längs einer Richtung parallel der ersten Zylinderachse 17, zwei als Kugeln ausgestaltete Klemmvorrichtungen 6 nebeneinander angeordnet, die sich in Richtung der ersten Zylinderachse 17 erstrecken und einen hexagonalen Querschnitt der Haltevorrichtung 5 zumindest geringfügig reduzieren.

Weiter ist an einer Außenseite des ersten Grundkörpers 3, an welcher eine Seite der Haltevorrichtung 5 parallel zu einer Seite der ersten Aufnahmevorrichtung 8 orientiert ist, eine langlochartige Ausnehmung 19 als ein erstes Anschlagelement 20 angeordnet, das sich radial bezüglich der ersten Zylinderachse 17 des ersten Grundkörpers 3 bis in die erste Aufnahmevorrichtung 8 des ersten Grundkörpers 3 erstreckt. Die Ausgestaltung der ersten langlochartigen Ausnehmung 19 ist in Figur 1b dargestellt, die den ersten Grundkörper 3 in einem Schnitt zeigt. Das erste Anschlagelement 20 erstreckt sich auf einer Länge L in eine Richtung längs der ersten Zylinderachse 17 und grenzt an die Haltevorrichtung 5 an. Eine Breite B des ersten Anschlagelements 20 ist symmetrisch bezüglich der ersten Zylinderachse 17 orientiert, wobei die Breite B des ersten Anschlagelements 20 einer halben Breite einer Fläche der als Innenvierkant ausgebildeten ersten Aufnahmevorrichtung 8 entspricht. Das erste Anschlagelement 20 weist ein hinteres Ende 36 sowie ein vorderes Ende 37 auf, wobei das hintere Ende 36 in Richtung des zweiten offenen Endes 7 des ersten Grundkörpers 3 und das vordere Ende 37 in Richtung des ersten offenen Endes 4 des ersten Grundköpers 3 orientiert ist.

In das erste Anschlagelement 20 greift ein flexibles und federndes Betätigungselement 26 ein, dessen Form im Wesentlichen mit der Form des ersten Anschlagelements 20 korrespondiert. Das Betätigungselement 26 ist durch Druckbeaufschlagung federnd in Richtung der ersten Zylinderachse 17 und somit zumindest teilweise in die erste Aufnahmevorrichtung 8 drückbar. Das Betätigungselement 26 ist teilweise an einem Außenumfang des ersten Grundkörpers 3 form- und reibschlüssig gehalten und dient zudem einer Fixierung der Klemmvorrichtung 6 in der Haltevorrichtung 5

Das Setzwerkzeug 1 umfasst neben dem ersten Grundkörper 3 einen zweiten, vollzylinderartigen Grundkörper 9. Der erste Grundkörper 3 und der zweite Grundkörper 9 sind im demontierten Zustand voneinander getrennt. Der zweite Grundkörper 9 weist an einem hinteren Ende 11 eine als ein SDS-Adapter ausgestaltete Werkzeugvorrichtung 12 und eine stirnseitig angeordnete Werkzeugschlagfläche 13 auf. Die Werkzeugvorrichtung 12 dient der Aufnahme des zweiten Grundkörpers 9 in einem Bohrhammer (nicht dargestellt). Durch die Werkzeugvorrichtung 12 kann der Bohrhammer auf den zweiten Grundkörper 9 eine Drehenergie übertragen und bezüglich einer zweiten Zylinderachse 18 in Drehung versetzen. Durch die Werkzeugschlagfläche 13 kann der Bohrhammer eine Schlagenergie längs der Zylinderachse 18 auf den zweiten Grundkörper 9 übertragen. Weiter weist der zweite Grundkörper 9 einen bezüglich der zweiten Zylinderachse 18 drehsymmetrisch ausgestalteten scheibenförmigen Bund 39 auf. Der Bund 39 weist eine in Richtung eines zweiten Endes 14 des zweiten Grundkörpers 9 orientierte Schulter 27 auf, die einen maximalen Weg des zweiten Grundkörpers 9, in Richtung des ersten offenen Endes 4 des ersten Grundkörpers 3, im ersten Grundkörper 3 begrenzt. Zwischen dem zweiten Ende 14 des zweiten Grundkörpers 9 und der Schulter 27 ist am Grundkörper 9 eine, als Vierkant ausgestaltete zweite Aufnahmevorrichtung 16 angeordnet, deren Form mit der Form der ersten Aufnahmevorrichtung 8 korrespondiert. Die zweite Aufnahmevorrichtung 16 ist im montierten Zustand leichtgängig in der ersten Aufnahmevorrichtung 8 verschieblich und formschlüssig in dieser geführt. Am zweiten Ende 14 des zweiten Grundkörpers 9 ist an der zweiten Aufnahmevorrichtung 16 ein zweites federbeaufschlagtes Anschlagelement 21 angeordnet, das als zylinderstiftartiger Drucktaster 22 ausgestaltet ist. Der Drucktaster 22 steht in einem Ausgangszustand radial bezüglich der zweiten Zylinderachse 18 zumindest teilweise über eine Seite der als Vierkant ausgestalteten zweiten Aufnahmevorrichtung 16 über. Durch eine Druckbeaufschlagung in Richtung der zweiten Zylinderachse 18 ist der Drucktaster 22 in die zweite Aufnahmevorrichtung 16 derart weit eindrückbar, dass dieser höchstens nur noch geringfügig über die zweite Aufnahmevorrichtung 16 übersteht.

Zur Montage des ersten Grundkörpers 3 und des zweiten Grundkörpers 9 sind die erste Zylinderachse 17 des ersten Grundkörpers 3 und die zweite Zylinderachse 18 des zweiten Grundkörpers 9 zumindest näherungsweise deckungsgleich zu bringen und der zweite Grundkörper 9 in einer Montagerichtung 40 in das zweite offene Ende 7 des ersten Grundkörpers 3 einzuschieben. Der Drucktaster 22 ist hierbei in Richtung des ersten Anschlagelements 20 zu orientieren. Durch eine als Schräge ausgestaltete Einführeinrichtung 25, die am zweiten offenen Ende 7 des ersten Grundkörpers 3 angeordnet ist und sich bis zum hinteren Ende 36 des ersten Anschlagelements 20 erstreckt, ist der zweite Grundkörper 9 in den ersten Grundkörper 3 einführbar. Die Einführeinrichtung 25 ist vom zweiten offenen Ende 7 in Richtung der ersten Zylinderachse 17 geneigt. Durch Einschieben des zweiten Grundkörpers 9 in den ersten Grundkörper 3 wird der Drucktaster 22 durch die Einführeinrichtung 25 in Richtung der zweiten Zylinderachse 18 gedrückt. Tritt der Drucktaster 22 am hinteren Ende 36 des ersten Anschlagelements 20 in das erste Anschlagelement 20 ein, gelangt der Drucktaster 22 in seine Ausgangslage zurück, wodurch der Drucktaster 22 in Wirkverbindung mit dem ersten Anschlagelement 20 tritt. Somit kann der zweite Grundkörper 9 nicht in einer Richtung entgegen der Montagerichtung 40 über das hintere Ende 36 hinaus vom ersten Grundkörper 3 getrennt werden. Zur Trennung muss mittels des Betätigungselements 26 der Drucktaster 22 außer Eingriff zum ersten Anschlagelement 20 gebracht werden. Dadurch können der erste Grundkörper 3 und der zweite Grundkörper 9 voneinander getrennt werden. Sollen mit Hilfe des Setzwerkzeuges 1 Bolzenanker 2 mit unterschiedlichen Durchmessern gesetzt werden, muss jeweils nur der erste Grundkörper 3, der auf eine jeweilige Bolzenankergröße angepasst ist, ausgewechselt und auf den zweiten Grundkörper 9 aufgesteckt werden. Der Abstand des Bunds 39 und der Schulter 27 zum Drucktaster 22 an der zweiten Aufnahmevorrichtung 16 ist derart mit einem Abstand des vorderen Endes 37 des ersten Anschlagelements 20 zu dem zweiten offenen Ende 7 des ersten Grundkörpers 3 abgestimmt, dass, wenn die Schulter 27 mit dem hinteren Ende 7 in Anlage tritt, der Drucktaster 22 nicht in Anlage mit dem vorderen Ende 37 des ersten Anschlagelements 20 treten kann. Somit verhindert die Schulter 27 als Widerlager am zweiten offenen Ende 7 des ersten Grundkörpers 3, dass der Drucktaster 22 über das vordere Ende 37 hinaus verschoben und somit beschädigt wird.

Weiter ist in Figur 1 ein mit Hilfe des Setzwerkzeugs 1 in einem festen Untergrund 10 zu setzender Bolzenanker 2 dargestellt. Der Bolzenanker 2 umfasst einen Metallbolzen 28, der ein erstes Ende 30 mit einer am ersten Ende 30 angeordneten Eintreibfläche 29 umfasst. Ein Gewinde 31 erstreckt sich vom ersten Ende 30, an welchem eine Mutter 32 angeordnet ist, in Richtung eines zweiten Endes 34, an welchem ein Konus 33 angeformt ist. Ein Spreizelement 23, welches als Spreizclip 24 ausgestaltet ist, ist angrenzend am Konus 33 angeordnet. Der Bolzenanker 2 ist über die Mutter 32 formschlüssig in der Haltevorrichtung 5 gehalten und zudem gegen Herausfallen durch die Klemmvorrichtungen 6 in der Haltevorrichtung 5 gesichert.

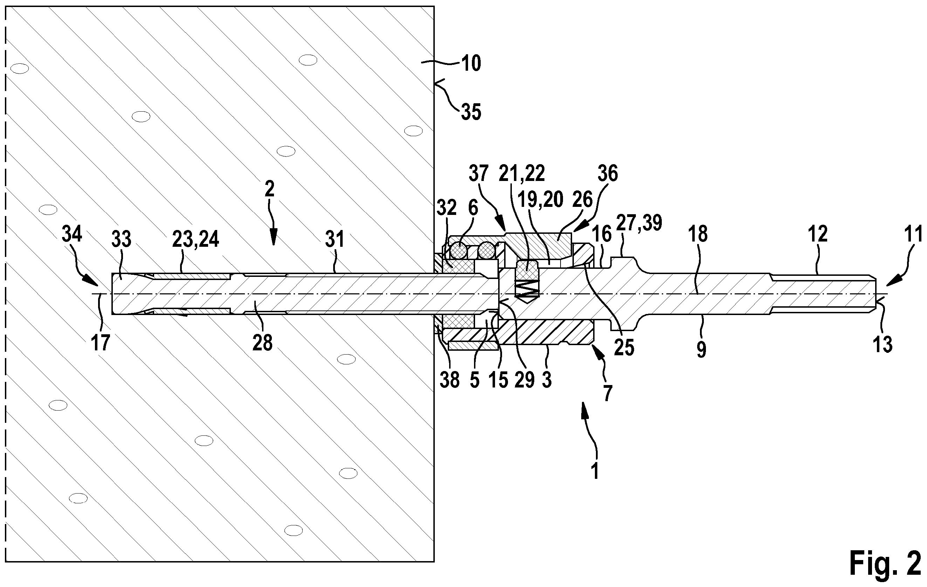

Figur 2 zeigt das erfindungsgemäße Setzwerkzeug 1 aus Figur 1 in einem Vormontagezustand. Unter "Vormontagezustand" ist ein Zustand zu verstehen, in welchem der Bolzenanker 2 mit dem Setzwerkzeug 1 mit Hilfe eines Bohrhammers (nicht dargestellt) in den festen Untergrund 10 eingetrieben und verspannt werden kann. In Figur 2 ist der Bolzenanker 2 bereits mit dem Setzwerkzeug 1 in den festen Untergrund 10 eingetrieben. Nachdem der Bolzenanker 2 in die Haltevorrichtung 5 des ersten Grundkörpers 3 eingeschoben und über die Mutter 32 klemmend in der Haltevorrichtung 5 gehalten ist, ist der Metallbolzen 28 derart weit in Richtung des zweiten offenen Endes 7 des ersten Grundkörpers 3 zu drehen, dass die Bolzenschlagfläche 15 und die Eintreibfläche 29 in Anlage treten und sich zudem der Drucktaster 22 am vorderen Ende 37 des ersten Anschlagelements 20 befindet. Diese Konstellation ist in Figur 2 dargestellt. Dadurch, dass die Bolzenschlagfläche 15 mit der Eintreibfläche 29 in Kontakt tritt, wird die Schlagenergie des Bohrhammers direkt auf den Metallbolzen 28 übertragen und somit die Mutter 32 und das Gewinde 31 während des Eintreibvorganges nicht beschädigt. Ist der Bolzenanker 2 ausreichend weit in den festen Untergrund 10 eingetrieben, vorzugsweise bis eine Unterlegscheibe 38 mit einer Oberfläche 35 des festen Untergrunds 10 in Kontakt tritt, kann der Bolzenanker 2 im Untergrund 10 verspannt werden. Dazu ist mit dem Bohrhammer Drehenergie auf den zweiten Grundkörper zu übertragen, welcher die Drehenergie an den ersten Grundkörper 3 und dieser wiederum die Drehenergie auf die Mutter 32 überträgt.

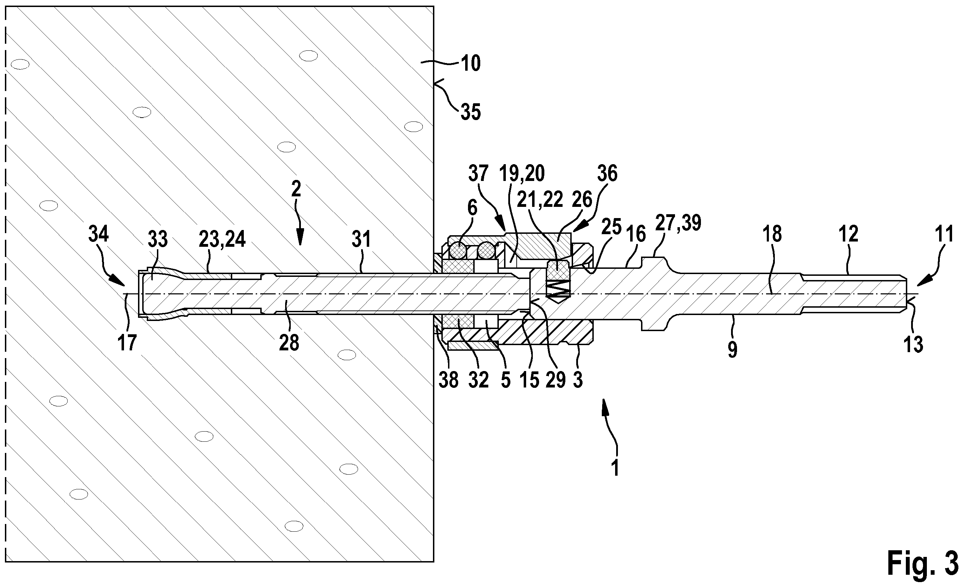

In Figur 3 ist das erfindungsgemäße Setzwerkzeug 1 aus den Figuren 1 und 2 in einem Endmontagezustand mit dem in dem Untergrund 10 verspreizten Bolzenanker 2 dargestellt. Von "Endmontagezustand" ist zu sprechen, sobald der Bolzenanker 2 in dem Untergrund 10 verspreizt ist. Durch die Drehenergie, die auf die Mutter 32 wirkt, wird der Metallbolzen 31 entgegen seiner Einbringrichtung gezogen. Der Spreizclip 24 bleibt im Wesentlichen ortsfest im zu befestigenden Untergrund 10, wodurch der Konus 33 des Metallbolzens 28 den Spreizclip 24 radial bezüglich der ersten Zylinderachse 17 verspreizt. Während des Verspreizvorganges wird der zweite Grundkörper 9 bezüglich des ersten Grundkörpers 3 entgegen der Montagerichtung 40 und somit der Drucktaster 22 in Richtung des hinteren Endes 36 des ersten Anschlagelements 20 bewegt. Abschließend kann das Setzwerkzeug 1 von dem Bolzenanker 2 getrennt werden.

### Bezuqszeichenliste

- 1: Setzwerkzeug
- 2: Bolzenanker
- 3: erster Grundkörper
- 4: erstes offenes Ende des ersten Grundkörpers 3
- 5: Haltevorrichtung
- 6: Klemmvorrichtung
- 7: zweites offenes Ende des ersten Grundkörpers 3
- 8: erste Aufnahmevorrichtung
- 9: zweiter Grundkörper
- 10: fester Untergrund
- 11: erstes Ende des zweiten Grundkörpers 9
- 12: Werkzeugvorrichtung
- 13: Werkzeugschlagfläche
- 14: zweites Ende des zweiten Grundkörpers 9
- 15: Bolzenschlagfläche
- 16: zweite Aufnahmevorrichtung
- 17: erste Zylinderachse des ersten Grundkörpers 3
- 18: zweite Zylinderachse des zweiten Grundkörpers 9
- 19: Ausnehmung
- 20: erstes Anschlagelement
- 21: zweites federbeaufschlagtes Anschlagelement
- 22: Drucktaster
- 23: Spreizelement
- 24: Spreizclip
- 25: Einführeinrichtung
- 26: Betätigungselement
- 27: Schulter
- 28: Metallbolzen
- 29: Eintreibfläche
- 30: erstes Ende des Metallbolzens 28
- 31: Gewinde
- 32: Mutter
- 33: Konus
- 34: zweites Ende des Metallbolzens 28
- 35: Oberfläche des festen Untergrunds 10
- 36: hinteres Ende des ersten Anschlagelements 20
- 37: vorderes Ende des ersten Anschlagelements 20
- 38: Unterlegscheibe
- 39: Bund
- 40: Montagerichtung
- L: Länge des ersten Anschlagelements 20
- B: Breite des ersten Anschlagelements 20

## Patentansprüche

1. Setzwerkzeug (1), für Bolzenanker (2), aufweisend
- einen ersten, insbesondere hohlzylinderartigen, Grundkörper (3) mit einem ersten Ende (4), eine am ersten Ende (4) angeordnete Haltevorrichtung (5) für einen Bolzenanker (2), insbesondere mit einer Klemmvorrichtung (6), einem zweiten Ende (7), eine am zweiten Ende (7) angeordnete, insbesondere mehrkantig ausgestaltete, erste Aufnahmevorrichtung (8),
- und einen zweiten, insbesondere vollzylinderartigen, Grundkörper (9) zum schlagenden Einbringen und Verspannen des Bolzenankers (2) in einen festen Untergrund (10), mit einem ersten Ende (11), eine am ersten Ende (11) angeordnete Werkzeugvorrichtung (12) mit einer stirnseitigen Werkzeugschlagfläche (13), einem zweiten Ende (14), eine am zweiten Ende (14) angeordnete stirnseitige Bolzenschlagfläche (15) sowie eine zweite Aufnahmevorrichtung (16), die mit der ersten Aufnahmevorrichtung (8) des ersten Grundkörpers (3) korrespondiert,
- wobei eine erste Zylinderachse (17) des ersten Grundkörpers (3) und eine zweite Zylinderachse (18) des zweiten Grundkörpers (9) im Wesentlichen koaxial sind und der zweite Grundkörper (9) mit der zweiten Aufnahmevorrichtung (16) in der ersten Aufnahmevorrichtung (8) des ersten Grundkörpers (3) axial verschieblich geführt und bezüglich des ersten Grundkörpers (3) drehsicher gehalten ist,
**dadurch gekennzeichnet, dass** der erste Grundkörper (3) eine Ausnehmung (19) als ein, insbesondere parallel zur ersten Zylinderachse (17) orientiertes, erstes, insbesondere langlochartiges, Anschlagelement (20) aufweist, das mit einem zweiten, insbesondere zapfenartigen, in radialer Richtung federbeaufschlagten Anschlagelement (21) am zweiten Grundkörper (9) korrespondiert und eine Bewegung des ersten und des zweiten Grundkörpers (3, 9) relativ zueinander in axialer Richtung begrenzt.

2. Setzwerkzeug (1) nach Anspruch 1, **dadurch gekennzeichnet, dass** das zweite Anschlagelement (21) als Drucktaster (22) ausgestaltet ist.

3. Setzwerkzeug (1) nach Anspruch 1 oder 2, **dadurch gekennzeichnet, dass** ein Durchmesser des zweiten Anschlagelements (21) insbesondere mit einer Breite des ersten Anschlagelements (20) korrespondiert.

4. Setzwerkzeug (1) nach einem der Ansprüche 1 bis 3 kombiniert mit einem Bolzenanker (2), **dadurch gekennzeichnet, dass** eine Länge des ersten Anschlagelements (20) mit einem Verspreizweg eines Spreizelements (23), insbesondere einem Spreizclip (24), des Bolzenankers (2) korrespondiert.

5. Setzwerkzeug (1) nach einem der Ansprüche 1 bis 4, **dadurch gekennzeichnet, dass** am zweiten Ende (7) des ersten Grundkörpers (3) eine Einführeinrichtung (25) angeordnet ist, durch welche das zweite Anschlagelement (21) in Wirkverbindung mit dem ersten Anschlagelement (20) bringbar ist.

6. Setzwerkzeug (1) nach einem der vorherigen Ansprüche, **dadurch gekennzeichnet, dass** durch ein am ersten Grundkörper (3) angebrachtes Betätigungselement (26) das zweite Anschlagelement (21) von dem ersten Anschlagelement (20) und somit der erste Grundkörper (3) vom zweiten Grundkörper (9) trennbar ist.

7. Setzwerkzeug (1) nach einem der vorherigen Ansprüche, **dadurch gekennzeichnet, dass** der zweite Grundkörper (3) eine Schulter (27) aufweist, wodurch eine maximale axiale Verschieblichkeit des zweiten Grundkörpers (9) in Richtung des ersten Endes (4) des ersten Grundkörpers (3) begrenzbar ist.

8. Setzwerkzeug (1) nach einem der vorherigen Ansprüche, **dadurch gekennzeichnet, dass** der erste Grundkörper (3) und der zweite Grundkörper (9) aus Metall sind.

9. Verfahren zum Setzen eines Bolzenankers (2), der einen Metallbolzen (28) mit einer Eintreibfläche (29) an einem ersten Ende (30), ein Gewinde (31) mit Mutter (32), sowie einen Konus (33) mit einem Spreizelement (23) an einem zweiten Ende (34) umfasst, mit einem Setzwerkzeug (1) nach einem der vorangegangenen Ansprüche, **dadurch gekennzeichnet, dass** das Verfahren folgende Vormontageschritte umfasst:
- Verbinden der Werkzeugvorrichtung (12) und der stirnseitigen Werkzeugschlagfläche (13) am ersten Ende (11) des zweiten Grundkörpers (9) mit einem schlagenden und drehenden Werkzeug, insbesondere einem Bohrhammer,
- Einstecken des ersten Endes (30) des Metallbolzens (28) in die Haltevorrichtung (5) am ersten Ende (4) des ersten Grundkörpers (3), derart, dass der Metallbolzen (28), insbesondere durch die Mutter (32), insbesondere klemmend durch die Klemmvorrichtung (6), in der Haltevorrichtung (5) im ersten Grundkörper (3) gehalten ist, sowie
- Eindrehen des Metallbolzens (28) derart weit in den ersten Grundkörper (3), dass die Eintreibfläche (29) mit der stirnseitigen Bolzenschlagfläche (15) des zweiten Grundkörpers (9) in Kontakt tritt und das zweite Anschlagelement (21) derart weit in Richtung eines vorderen Endes (37) des ersten Anschlagelements (20), welches dem ersten Ende (4) des ersten Grundkörpers (3) zugewandt ist, angeordnet ist, damit ein ausreichendes Verspreizen des Spreizelements (23) auf dem Konus (33) bei einem Auseinanderbewegen des ersten und des zweiten Grundkörpers (3, 9) ermöglicht ist.

10. Verfahren zum Setzen eines Bolzenankers (2) nach Anspruch 9, **dadurch gekennzeichnet, dass** nach der Vormontage der Bolzenanker (2) mit dem schlagenden und drehenden Werkzeug, insbesondere mit einem Bohrhammer, schlagend, mit dem Konus (33) voraus, in eine gewünschte Tiefe, insbesondere bis die Mutter (32) und/oder das erste Ende (4) des ersten Grundkörpers (3) mit einer Oberfläche (35) des festen Untergrunds (10) in Kontakt tritt, in den festen Untergrund (10) eingetrieben wird.

11. Verfahren zum Setzen eines Bolzenankers (2) nach Anspruch 9 oder 10, **dadurch gekennzeichnet, dass** nach dem Eintreiben des Bolzenankers (2) in den festen Untergrund (10), das Werkzeug ein Drehmoment auf den zweiten Grundkörper (9) überträgt, wodurch sich das zweite Anschlagelement (21) in Richtung eines hinteren Endes (36) des ersten Anschlagelements (20) bewegt, welches dem zweiten Ende (7) des ersten Grundkörpers (3) zugewandt ist, wodurch das Spreizelement (23) des Bolzenankers (2) durch den Konus (33) aufspreizt.

12. Verfahren zum Setzen eines Bolzenankers (2) nach einem der Ansprüche 9 bis 11, **dadurch gekennzeichnet, dass** in einem dritten Montageschritt das Setzwerkzeug (1) und das Werkzeug von dem Bolzenanker (2) entfernt werden.

## Claims

1. Setting tool (1), for bolt anchors (2), having:
- a first, especially hollow-cylindrical, main body (3) having a first end (4), a holding device (5) for a bolt anchor (2), especially having a clamping device (6), which holding device is arranged at the first end (4), a second end (7), a first receiving device (8), especially a polygonal receiving device, which is arranged at the second end (7),
- and a second, especially solid-cylindrical, main body (9) for hammered introduction and clamping of the bolt anchor (2) in a solid substrate (10), having a first end (11), a tool device (12) having a frontal tool striking face (13), which tool device is arranged at the first end (11), a second end (14), a frontal bolt striking face (15) arranged at the second end (14), and a second receiving device (16) which is complementary to the first receiving device (8) of the first main body (3),
- wherein a first cylinder axis (17) of the first main body (3) and a second cylinder axis (18) of the second main body (9) are substantially coaxial, and the second main body (9) is guided so as to be axially displaceable with the second receiving device (16) in the first receiving device (8) of the first main body (3) and is held fixed against rotation with respect to the first main body (3),
**characterised in that** the first main body (3) has an opening (19) as a first, especially slot-like, stop element (20) which is especially oriented parallel to the first cylinder axis (17), which first stop element is complementary to a second, especially pin-like, stop element (21) on the second main body (9), which second stop element is spring-loaded in a radial direction, and limits a movement of the first and second main bodies (3, 9) relative to one another in an axial direction.

2. Setting tool (1) according to claim 1, **characterised in that** the second stop element (21) is configured as a push button (22).

3. Setting tool (1) according to claim 1 or 2, **characterised in that** a diameter of the second stop element (21) is especially complementary to a width of the first stop element (20).

4. Setting tool (1) according to any one of claims 1 to 3 combined with a bolt anchor (2), **characterised in that** a length of the first stop element (20) is complementary to an expansion travel of an expansion element (23), especially an expansion clip (24), of the bolt anchor (2).

5. Setting tool (1) according to any one of claims 1 to 4, **characterised in that** at the second end (7) of the first main body (3) there is arranged an insertion device (25) by means of which the second stop element (21) can be brought into operative connection with the first stop element (20).

6. Setting tool (1) according to any one of the preceding claims, **characterised in that** by means of an operating element (26) mounted on the first main body (3) the second stop element (21) is separable from the first stop element (20) and accordingly the first main body (3) is separable from the second main body (9).

7. Setting tool (1) according to any one of the preceding claims, **characterised in that** the second main body (3) has a shoulder (27), so that a maximum axial displaceability of the second main body (9) can be limited in the direction of the first end (4) of the first main body (3).

8. Setting tool (1) according to any one of the preceding claims, **characterised in that** the first main body (3) and the second main body (9) are made of metal.

9. Method for setting a bolt anchor (2), which comprises a metal bolt (28) having a drive-in face (29) at a first end (30), a thread (31) having a nut (32), and a cone (33) having an expansion element (23) at a second end (34), using a setting tool (1) according to any one of the preceding claims, **characterised in that** the method comprises the following preliminary mounting steps:
- connection of the tool device (12) and the frontal tool striking face (13) at the first end (11) of the second main body (9) to a hammering and rotating tool, especially to a hammer drill,
- insertion of the first end (30) of the metal bolt (28) into the holding device (5) at the first end (4) of the first main body (3) in such a way that the metal bolt (28) is held, especially by the nut (32), especially clamped by the clamping device (6), in the holding device (5) in the first main body (3), and
- screwing of the metal bolt (28) into the first main body (3) to an extent such that the drive-in face (29) enters into contact with the frontal bolt striking face (15) of the second main body (9), and the second stop element (21) is positioned towards a front end (37) of the first stop element (20), which front end faces towards the first end (4) of the first main body (3), to an extent that allows sufficient expansion of the expansion element (23) on the cone (33) when the first and second main bodies (3, 9) are moved apart.

10. Method for setting a bolt anchor (2) according to claim 9, **characterised in that,** after the preliminary mounting, the bolt anchor (2) is driven, cone (33) first, into the solid substrate (10) to a desired depth using the hammering and rotating tool, especially using a hammer drill, especially until the nut (32) and/or the first end (4) of the first main body (3) enters into contact with a surface (35) of the solid substrate (10).

11. Method for setting a bolt anchor (2) according to claim 9 or 10, **characterised in that** after the bolt anchor (2) has been driven into the solid substrate (10), the tool transmits a torque to the second main body (9), with the result that the second stop element (21) moves in the direction of a rear end (36) of the first stop element (20), which rear end faces towards the second end (7) of the first main body (3), with the result that the expansion element (23) of the bolt anchor (2) is expanded by the cone (33).

12. Method for setting a bolt anchor (2) according to any one of claims 9 to 11, **characterised in that** in a third mounting step the setting tool (1) and the tool are removed from the bolt anchor (2).

## Revendications

1. Outil de pose (1), pour goujons d'ancrage (2), présentant
- un premier corps de base (3), notamment de type cylindrique creux, ayant une première extrémité (4), un dispositif de maintien (5) agencé à la première extrémité (4) pour un goujon d'ancrage (2), notamment ayant un dispositif de serrage (6), une deuxième extrémité (7), un premier dispositif de réception (8) agencé à la deuxième extrémité (7), notamment conçu sous forme polygonale,
- et un deuxième corps de base (9), notamment de type cylindrique plein, pour l'introduction par frappe et le serrage du goujon d'ancrage (2) dans un support solide (10), ayant une première extrémité (11), un dispositif d'outil (12) agencé à la première extrémité (11) ayant une surface de frappe d'outil côté frontal (13), une deuxième extrémité (14), une surface de frappe de goujon côté frontal (15) agencée à la deuxième extrémité (14) ainsi qu'un deuxième dispositif de réception (16), qui correspond au premier dispositif de réception (8) du premier corps de base (3),
- un premier axe de cylindre (17) du premier corps de base (3) et un deuxième axe de cylindre (18) du deuxième corps de base (9) étant essentiellement coaxiaux et le deuxième corps de base (9) étant guidé de manière à pouvoir coulisser axialement dans le premier dispositif de réception (8) du premier corps de base (3) avec le deuxième dispositif de réception (16) et étant maintenu de manière immobile en rotation par rapport au premier corps de base (3),
**caractérisé en ce que** le premier corps de base (3) présente un évidement (19) sous forme d'un premier élément de butée (20), notamment en forme de trou oblong, notamment orienté parallèlement au premier axe de cylindre (17), qui correspond à un deuxième élément de butée (21), notamment en forme de tenon, sollicité par ressort dans la direction radiale, sur le deuxième corps de base (9) et qui limite un mouvement du premier et du deuxième corps de base (3, 9) l'un par rapport à l'autre dans la direction axiale.

2. Outil de pose (1) selon la revendication 1, **caractérisé en ce que** le deuxième élément de butée (21) est conçu sous forme de bouton-poussoir (22).

3. Outil de pose (1) selon la revendication 1 ou 2, **caractérisé en ce qu'**un diamètre du deuxième élément de butée (21) correspond notamment à une largeur du premier élément de butée (20).

4. Outil de pose (1) selon l'une quelconque des revendications 1 à 3, combiné à un goujon d'ancrage (2), **caractérisé en ce qu'**une longueur du premier élément de butée (20) correspond à une course d'écartement d'un élément d'écartement (23), notamment d'un clip d'écartement (24), du goujon d'ancrage (2).

5. Outil de pose (1) selon l'une quelconque des revendications 1 à 4, **caractérisé en ce qu'**à la deuxième extrémité (7) du premier corps de base (3) est agencé un appareil d'insertion (25), par lequel le deuxième élément de butée (21) peut être amené en liaison active avec le premier élément de butée (20).

6. Outil de pose (1) selon l'une quelconque des revendications précédentes, **caractérisé en ce qu'**un élément d'actionnement (26) disposé sur le premier corps de base (3) permet de séparer le deuxième élément de butée (21) du premier élément de butée (20) et donc le premier corps de base (3) du deuxième corps de base (9).

7. Outil de pose (1) selon l'une quelconque des revendications précédentes, **caractérisé en ce que** le deuxième corps de base (3) présente un épaulement (27), ce qui permet de limiter une capacité de coulissement axial maximale du deuxième corps de base (9) en direction de la première extrémité (4) du premier corps de base (3) .

8. Outil de pose (1) selon l'une quelconque des revendications précédentes, **caractérisé en ce que** le premier corps de base (3) et le deuxième corps de base (9) sont en métal.

9. Procédé de pose d'un goujon d'ancrage (2), qui comprend un goujon métallique (28) ayant une surface d'enfoncement (29) à une première extrémité (30), un filetage (31) ayant un écrou (32), ainsi qu'un cône (33) avec un élément d'écartement (23) à une deuxième extrémité (34), avec un outil de pose (1) selon l'une quelconque des revendications précédentes, **caractérisé en ce que** le procédé comprend les étapes de prémontage suivantes :
- la liaison du dispositif d'outil (12) et de la surface de frappe d'outil côté frontal (13) à la première extrémité (11) du deuxième corps de base (9) avec un outil de frappe et de rotation, notamment un marteau perforateur,
- l'insertion de la première extrémité (30) du goujon métallique (28) dans le dispositif de maintien (5) à la première extrémité (4) du premier corps de base (3), de telle sorte que le goujon métallique (28) est maintenu dans le dispositif de maintien (5) dans le premier corps de base (3), notamment par l'écrou (32), notamment par serrage par le dispositif de serrage (6), ainsi que
- le vissage du goujon métallique (28) dans le premier corps de base (3) jusqu'à ce que la surface d'enfoncement (29) entre en contact avec la surface de frappe de goujon côté frontal (15) du deuxième corps de base (9) et le deuxième élément de butée (21) est agencé en direction d'une extrémité avant (37) du premier élément de butée (20), qui fait face à la première extrémité (4) du premier corps de base (3) jusqu'à permettre un écartement suffisant de l'élément d'écartement (23) sur le cône (33) lors d'un éloignement du premier et du deuxième corps de base (3, 9).

10. Procédé de pose d'un goujon d'ancrage (2) selon la revendication 9, **caractérisé en ce qu'**après le prémontage, le goujon d'ancrage (2) est enfoncé dans le support solide (10) avec l'outil de frappe et de rotation, notamment avec un marteau perforateur, en frappant, avec le cône (33) en avant, à une profondeur souhaitée, notamment jusqu'à ce que l'écrou (32) et/ou la première extrémité (4) du premier corps de base (3) entre en contact avec une surface (35) du support solide (10) .

11. Procédé de pose d'un goujon d'ancrage (2) selon la revendication 9 ou 10, **caractérisé en ce qu'**après l'enfoncement du goujon d'ancrage (2) dans le support solide (10), l'outil transmet un couple de rotation au deuxième corps de base (9), le deuxième élément de butée (21) se déplaçant ainsi en direction d'une extrémité arrière (36) du premier élément de butée (20), qui fait face à la deuxième extrémité (7) du premier corps de base (3), ce qui provoque l'écartement de l'élément d'écartement (23) du goujon d'ancrage (2) par le cône (33) .

12. Procédé de pose d'un goujon d'ancrage (2) selon l'une quelconque des revendications 9 à 11, **caractérisé en ce que,** dans une troisième étape de montage, l'outil de pose (1) et l'outil sont retirés du goujon d'ancrage (2) .
